(19) Europäisches Patentamt
European Patent Office
Office européen des brevets

(11) **EP 4 253 997 B1**

(12) **EUROPEAN PATENT SPECIFICATION**

(45) Date of publication and mention
of the grant of the patent:
**28.01.2026 Bulletin 2026/05**

(21) Application number: **21909085.9**

(22) Date of filing: **01.12.2021**

(51) International Patent Classification (IPC):
**G01S 7/481** *(2006.01)*     **G01S 17/10** *(2020.01)*
**G01S 17/42** *(2006.01)*

(52) Cooperative Patent Classification (CPC):
**G01S 7/4814; G01S 17/10; G01S 17/42;**
G01S 17/931

(86) International application number:
**PCT/CN2021/134811**

(87) International publication number:
**WO 2022/135087 (30.06.2022 Gazette 2022/26)**

(54) **LASER TRANSMISSION MODULE, LASER RADAR, AND MOBILE PLATFORM**

LASERÜBERTRAGUNGSMODUL, LASERRADAR UND MOBILE PLATTFORM

MODULE DE TRANSMISSION LASER, RADAR LASER ET PLATEFORME MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.12.2020 CN 202011516720**

(43) Date of publication of application:
**04.10.2023 Bulletin 2023/40**

(73) Proprietor: **Huawei Technologies Co., Ltd.
Shenzhen, Guangdong 518129 (CN)**

(72) Inventors:
• **ZHOU, Ding
Shenzhen, Guangdong 518129 (CN)**
• **LI, Dongfang
Shenzhen, Guangdong 518129 (CN)**
• **ZHANG, Hui
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(56) References cited:
CN-A- 107 732 651     CN-A- 109 324 332
CN-A- 109 378 703     CN-A- 109 752 702
CN-A- 111 880 162     CN-U- 211 826 484
US-A1- 2007 222 678   US-A1- 2018 045 882
US-A1- 2018 278 011   US-A1- 2020 135 626

## Description

## TECHNICAL FIELD

This application relates to the field of detection technologies, and in particular, to a laser transmit module and a laser radar.

## BACKGROUND

As data collection capabilities of in-vehicle sensors are constantly expanded, automotive automation is gradually evolving from specific single function automation (for example, constant speed cruise and electronic stability control) to combined function automation assistance driving (for example, adaptive cruise, lane keeping, and emergency braking) and even to more advanced vehicle autonomous driving (for example, high-speed autonomous driving and autonomous parking and pickup). As one of most important sensors for high-level autonomous driving, a laser radar undertakes a key task of sensing various complex road conditions and identifying and classifying a plurality of targets. Therefore, performance of the laser radar directly determines a level and safety of an autonomous driving function that can be implemented in a vehicle equipped with the radar. A high-performance laser radar meeting a future requirement needs to achieve three core indicators such as a high resolution (an angle resolution < 0.3° or > 100 lines), a large field angle (a horizontal field angle > 140° and a vertical field angle > 30°), and long-distance detection (> 150 m), and also needs to have basic characteristics such as low costs, low complexity, and high reliability. However, limited by transmit power, the current laser radar has a limited detection distance, which cannot be further increased.

US 2018/0045882 A1 discloses an optical emitter package including a carrier, a switching die, and an optical emitter die mounted to the carrier. An energy storage device can be mounted to the carrier, and can be directly electrically and mechanically connected to the carrier. The carrier can provide electrical communication between the switching die, the optical emitter die, and the energy storage device.

US 2018/0278011 A1 discloses a laser diode packaging, in particular for system-in-a-chip (SoC) or system-in-a-package (SiP) LIDAR solutions.

US 2020/0135626 A1 discloses a semiconductor package includes a leadframe and a mold compound, with low inductance electrical connections between components of the package.

## SUMMARY

This application provides a laser transmit module and a laser radar to increase a detection distance of the laser radar. The invention is defined in the appended claims.

According to a first aspect, a laser transmit module is provided. The laser transmit module is used in a laser radar and configured to transmit a detection laser. The laser transmit module mainly includes a capacitor, a laser transmitter, and a field effect transistor. The capacitor is configured to supply power to the laser transmitter. The field effect transistor is configured to control the laser transmitter to be turned on. When connected, the capacitor, the laser transmitter, and the field effect transistor are interconnected through conductive pins to form a laser transmission loop. The capacitor, the laser transmitter, and the field effect transistor are fixedly connected through the interconnected conductive pins. In the laser transmission loop, loop inductance generated by the laser transmission loop affects a pulse peak value of a laser pulse transmitted by the laser transmitter, affecting a detection distance of the laser pulse. A value of the loop inductance is mainly affected by an area of the laser transmission loop. A larger area of the laser transmission loop indicates larger loop inductance. Therefore, in this application, the laser transmission loop is formed through a direct connection between the conductive pins of the capacitor, the laser transmitter, and the field effect transistor, to reduce distances between the foregoing components and reduce the area of the formed laser transmission loop, so as to reduce the loop inductance, increase the pulse peak value of the laser pulse, and further increase the detection distance of the laser pulse transmitted by the laser transmit module.

In a specific implementable solution, the capacitor, the laser transmitter, and the field effect transistor are disposed in a stacked manner, and the laser transmitter is located between the capacitor and the field effect transistor. The capacitor, the laser transmitter, and the field effect transistor are disposed in the stacked manner, to reduce the distances between the components, so as to reduce the area of the formed laser transmission loop and minimize the loop inductance.

In a specific implementable solution, the conductive pins of the laser transmitter, the capacitor, and the field effect transistor are enclosed in a ring.

In a specific implementable solution, a first conductive pin and a second conductive pin are disposed on a first surface that is of the capacitor and that faces the field effect transistor. A third conductive pin and a fourth conductive pin are disposed on a second surface that is of the field effect transistor and that faces the capacitor. A power supply pin and a ground pin are respectively disposed on two opposite surfaces of the laser transmitter. The power supply pin and the first conductive pin are disposed opposite to each other and conductively connected. The ground pin and the third conductive pin are disposed opposite to each other and conductively connected. The second conductive pin and the fourth conductive pin are disposed opposite to each other and conductively connected. Two pins of the laser transmitter are disposed on different surfaces, and pins of the capacitor and the field effect transistor are disposed on opposite surfaces, so that the pins between the components can be directly connected, to minimize the loop inductance of the formed laser transmission loop.

In a specific implementable solution, the power supply pin and the first conductive pin are bonded and connected by using a conductive adhesive. The ground pin and the third conductive pin are bonded and connected by using a conductive adhesive. The pins are bonded and secured by using the conductive adhesive, and a conductive effect is achieved.

In a specific implementable solution, the conductive adhesive may be a conductive silver adhesive or another type of conductive adhesive. The pins may be conductively connected by using different conductive adhesives.

In a specific implementable solution, the power supply pin is connected to the first conductive pin through welding. The ground pin is connected to the third conductive pin through welding. A fixed connection and a conductive connection between the components are implemented by the welding connections between the pins.

In a specific implementable solution, the second conductive pin and the fourth conductive pin are conductively connected through a conductive column. The conductive column and the laser transmitter are disposed on a same layer. A conductive connection and a fixed connection between the second conductive pin and the fourth conductive pin are implemented through the conductive column.

In a specific implementable solution, the conductive column is separately bonded and connected to the second conductive pin and the fourth conductive pin by using a conductive adhesive. A fixed connection and a conductive connection between the conductive column and the corresponding pin are implemented by using the conductive adhesive.

In a specific implementable solution, the conductive column is a conductive adhesive layer. The conductive adhesive layer is separately bonded and connected to the second conductive pin and the fourth conductive pin. A fixed connection and a conductive connection between the conductive column and the corresponding pin can be directly implemented by using the conductive adhesive layer.

In a specific implementable solution, the field effect transistor further includes a control pin. The control pin is located on a third surface of the field effect transistor, to facilitate a connection between the field effect transistor and a circuit board.

In a specific implementable solution, the third surface and the second surface are two opposite surfaces or two adjacent surfaces. The control pin, the third conductive pin, and the fourth conductive pin may be disposed on a surface that facilitates a connection to the circuit board.

In a specific implementable solution, the field effect transistor has the third surface for connecting to the circuit board, and the control pin is disposed on the third surface, to facilitate a connection between the control pin and the circuit board.

In a specific implementable solution, the capacitor includes a fifth conductive pin and a sixth conductive pin. The fifth conductive pin and the first conductive pin are separately conductively connected to one electrode plate of the capacitor. The sixth conductive pin and the second conductive pin are separately conductively connected to another electrode plate of the capacitor. The fifth conductive pin is configured to be connected to a power supply of the circuit board, and the sixth conductive pin is configured to be conductively connected to a ground layer of the circuit board, to facilitate a connection between the capacitor and the circuit board.

In a specific implementable solution, both the fifth conductive pin and the sixth conductive pin face the circuit board. Specifically, the capacitor has a fourth surface for connecting to the circuit board. The fifth conductive pin and the sixth conductive pin are disposed on the fourth surface, to facilitate a connection of the fifth conductive pin and the sixth conductive pin to the circuit board.

In a specific implementable solution, a quantity of laser transmitters is 2, and the two laser transmitters are respectively disposed on two sides of the capacitor. A quantity of field effect transistors is also 2, and the two field effect transistors are respectively disposed on sides that are of the two laser transmitters and that are away from the capacitor.

According to a second aspect, a laser radar is provided. The laser radar includes any one of the foregoing laser transmitters, a scanning apparatus, and a detector. The scanning apparatus is configured to reflect a detection laser transmitted by a laser transmit module into a scanning laser, and is configured to reflect, to the detector, a reflected laser obtained when the scanning laser reflected back by a detected object. The detector is configured to perform laser detection based on the reflected laser. In the foregoing technical solutions, the laser transmission loop is formed through a direct connection between the conductive pins of the capacitor, the laser transmitter, and the field effect transistor, to reduce distances between the foregoing components and reduce the area of the formed laser transmission loop, so as to reduce the loop inductance, increase the pulse peak value of the laser pulse, and further increase the detection distance of the laser pulse transmitted by the laser transmit module.

## BRIEF DESCRIPTION OF DRAWINGS

It is noted that embodiments of FIGS. 1 to 3, FIGS. 10 to 13 and FIGS. 17 and 18 are not part of the invention, but are illustrative examples useful for understanding the invention.

FIG. 1 is a schematic diagram of an application scenario of a laser transmit module according to an embodiment of this application;

FIG. 2 is a working principle diagram of a laser radar according to an embodiment of this application;

FIG. 3 is a circuit principle diagram of a laser transmit module according to an embodiment of this application;

FIG. 4 is a schematic diagram of a structure of a laser transmit module according to an embodiment of this application;

FIG. 5 is an exploded schematic diagram of a laser transmit module according to an embodiment of this application;

FIG. 6 is a schematic diagram of a connection between conductive pins between components of a laser transmit module according to an embodiment of this application;

FIG. 7 is a schematic diagram of a structure of a capacitor according to an embodiment of this application;

FIG. 8 is a schematic diagram of a structure of a laser transmitter according to an embodiment of this application;

FIG. 9 is a schematic diagram of a structure of a field effect transistor according to an embodiment of this application;

FIG. 10 to FIG. 13 are flowcharts of preparing a laser transmit module according to an embodiment of this application;

FIG. 14 is a schematic diagram of cooperation between a laser transmit module and a circuit board according to an embodiment of this application;

FIG. 15 is a schematic diagram of a laser transmission loop of a laser transmit module in the conventional technology;

FIG. 16 is a schematic diagram of a laser transmission loop of a laser transmit module according to an embodiment of this application;

FIG. 17 is a schematic diagram of a structure of another laser transmit module according to an embodiment of this application; and

FIG. 18 is a schematic diagram of a connection between the laser transmit module shown in FIG. 17 and a circuit board.

## DESCRIPTION OF EMBODIMENTS

To facilitate understanding of a laser transmit module provided in embodiments of this application, an application scenario of the laser transmit module is first described. The laser transmit module provided in embodiments of this application is used in a laser radar. The laser radar is a radar system that transmits a laser beam to detect characteristics such as a position and a speed of a target. A working principle of the laser radar is to transmit a detection signal (a laser pulse) to the target, and then compare a received signal (a target echo) reflected from the target with the transmitted signal to obtain information (parameters such as a distance, a direction, an altitude, a speed, an attitude, and even a shape of the target) about the target, to detect, track, and identify the target such as an aircraft, a vehicle, and a pedestrian.

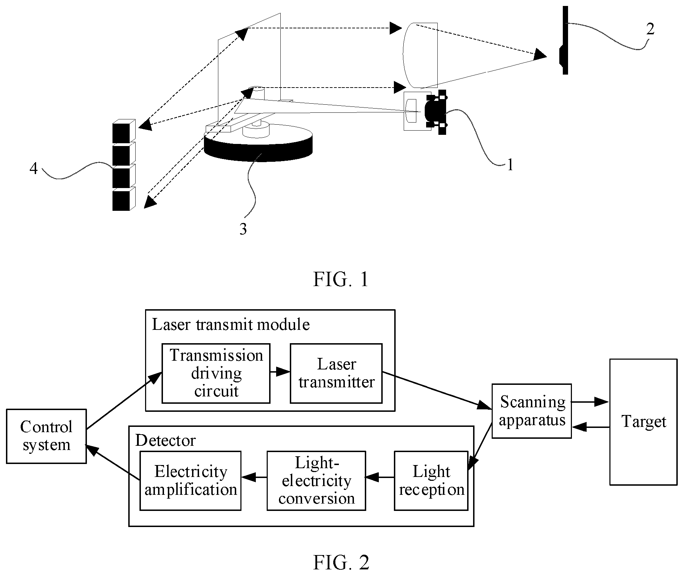

As shown in FIG. 1, a laser radar includes a laser transmit module 1, a scanning apparatus 2, a detector 3, an information processing system (not shown), and the like. The laser transmit module 1 converts an electric pulse into a laser pulse and transmits the laser pulse. The laser pulse is formed into a scanning light ray by using the scanning apparatus 2 for detection. The detector 3 restores the laser pulse reflected from a target object 4 into an electrical pulse, which is processed by the information processing system and sent to a display.

Refer to a flowchart shown in FIG. 2. A transmission instruction is first sent by a control system during detection. After the laser transmit module obtains the instruction, a transmission driving circuit generates a pulse current to drive a laser transmitter to transmit a laser pulse, and the laser pulse is transmitted after being adjusted by an internal scanning apparatus. Transmitted light is reflected by a surface of the target object; and a part of the reflected laser pulse returns along an original path, returns to the scanning apparatus after a very short period of time, and reaches the detector after being adjusted by the scanning apparatus. Because power of the returned laser pulse is very small, the laser pulse needs to be converted into electricity through light and then amplified, and converted into an electrical signal and sent to the control system. The control system analyzes a time difference between transmission of the laser pulse and reception of the laser pulse to determine a distance of the target object, to form a position of a coordinate point of the target object. The laser transmitter and the detector simultaneously work to continuously transmit and receive light beams at different angles, to finally obtain points of positions on a surface of the target object. These coordinate points are combined to form an outline point cloud picture of the object.

Main performance indicators of a laser radar include a detection distance, detection precision, and the like. The detection distance is an important indicator of the laser radar, and a value of the detection distance determines a range that can be observed by the laser radar. During long-distance measurement, more information about surrounding objects may be provided for a vehicle, and more time is available for determining and processing for autonomous driving of the vehicle. Therefore, a main development direction of the laser radar is to increase the detection distance.

The detection distance of the laser radar is mainly determined by peak power of the laser pulse transmitted by the laser transmit module and sensitivity of the detector. Therefore, how to increase the peak power of the laser pulse transmitted by the laser transmit module has become a major research direction. Because excessively high power of a laser transmitted by the laser transmit module causes damage to human eyes, total power of the transmitted laser pulse needs to be kept within a range causing no damage to the human eyes. Consequently, the total power of the laser pulse cannot be increased to increase the detection distance of the laser radar, and only the peak power of the laser pulse is increased to increase the detection distance of the laser radar.

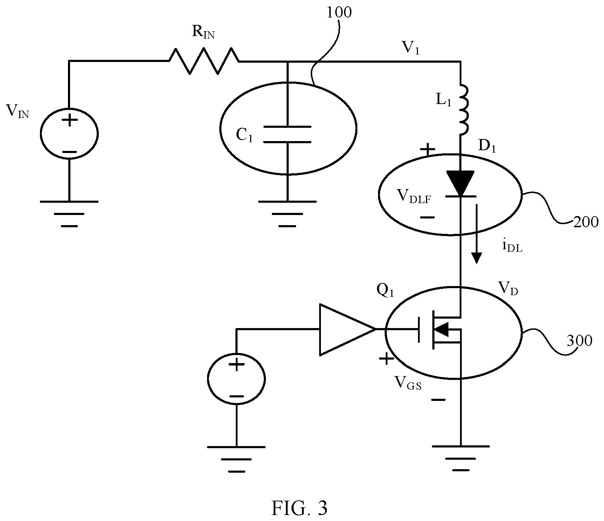

FIG. 3 is a circuit diagram of the laser transmit module. The laser transmit module includes a capacitor 100, a laser transmitter 200, and a field effect transistor 300. The capacitor 100, the laser transmitter 200, and the field effect transistor 300 form a laser transmission loop. During use, the capacitor 100 is first charged by a power supply. When a laser pulse needs to be transmitted, the field effect transistor 300 is controlled to be turned on, and the field effect transistor 300 is grounded. When the capacitor 100 starts to discharge, a current flows through the laser transmitter 200 and enters the field effect transistor 300. In a discharge process of the capacitor 100, the current gradually increases and then gradually decreases, to form a pulse current. When the pulse current flows through the laser transmitter 200, the laser transmitter 200 is driven to transmit a laser pulse. Peak power of the laser pulse is positively correlated with a peak current of the pulse current, and a pulse width of the laser pulse is positively correlated with a pulse width of the pulse current.

A connection conductor between the capacitor 100, the field effect transistor 300, and the laser transmitter 200 generates parasitic inductance. The parasitic inductance is equivalent inductance presented by a conductor (for example, a connection wire, a component lead, or a component body) in a circuit. The parasitic inductance is also referred to as distributed inductance or stray inductance. An inductance value of such parasitic inductance is usually small and has little impact on a low-frequency signal, but at a high frequency, such parasitic inductance has significant impact on signals. The parasitic inductance in this application is mainly loop inductance generated by the laser transmission loop.

The loop inductance has great impact on the laser pulse. A width of the laser pulse becomes larger and the peak power becomes lower in time domain, resulting in a decrease in the detection precision and the detection distance. For a specific impact relationship, refer to formulas: Peak current $I_{pk} = (V_{in} - V_{DLF}) \cdot \sqrt{\dfrac{C}{L}}$ (Formula 1), where $V_{in}$ is an input voltage, $V_{DLF}$ is an internal voltage drop of the laser transmitter, C is a capacitance value of the capacitor, and L is a loop inductance, and Pulse width $Tw = \dfrac{2\pi\sqrt{LC}}{3}$ (Formula 2). It can be learned from the formula 1 and the formula 2 that, when a value of L decreases, the peak current of the pulse current increases, and the pulse width of the pulse current decreases. In this case, the peak power of the laser pulse transmitted by the corresponding laser transmitter correspondingly increases, and the pulse width correspondingly decreases. The detection distance and precision of the laser radar can be increased without changing a design and another input condition of the laser transmission loop.

To reduce the loop inductance generated by the laser transmission loop, in embodiments of this application, the laser transmit module is modularized, and then the entire module is connected to a circuit board. During modularization, conductive pins of the capacitor 100, the laser transmitter 200, and the field effect transistor 300 are disposed opposite to each other, so that the capacitor, the laser transmitter, and the field effect transistor are interconnected through the conductive pins to form the laser transmission loop, and the capacitor, the laser transmitter, and the field effect transistor are fixedly connected through the interconnected conductive pins, to assemble a function module.

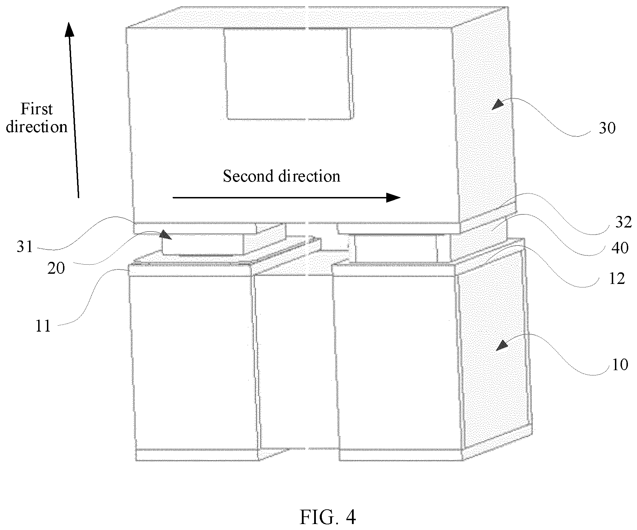

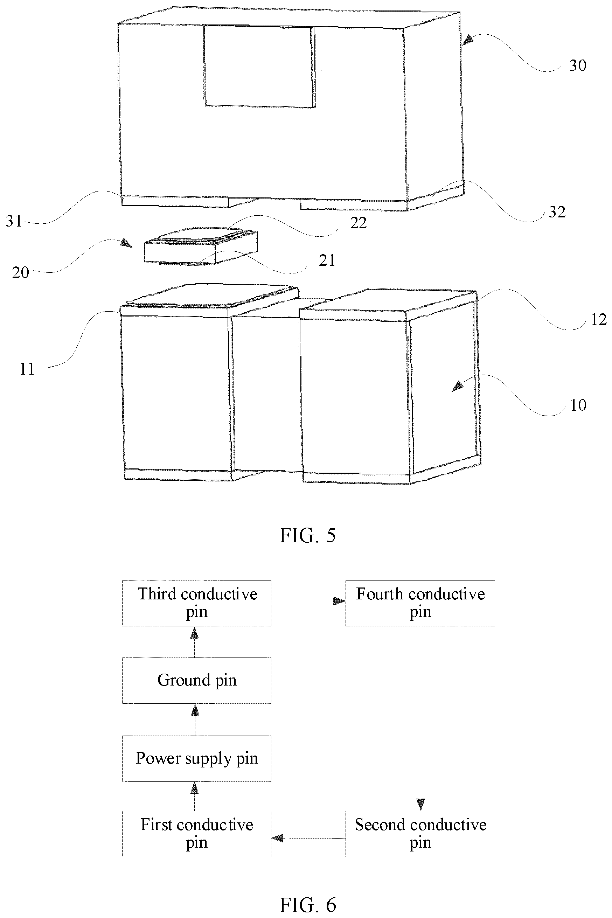

FIG. 4 is a schematic diagram of a structure of a laser transmit module according to an embodiment of this application. FIG. 5 is an exploded schematic diagram of a laser transmit module according to an embodiment of this application. The laser transmit module provided in embodiments of this application mainly includes a laser transmitter 20, a capacitor 10, and a field effect transistor 30. The capacitor 10 is configured to supply power to the laser transmitter 20, and the field effect transistor 30 is configured to control the laser transmitter 20 to be turned on.

The capacitor 10, the laser transmitter 20, and the field effect transistor 30 are disposed in a stacked manner to form a "sandwich"-like structure. The capacitor 10, the laser transmitter 20, and the field effect transistor 30 are disposed in the stacked manner in a first direction, and the laser transmitter 20 is located between the capacitor 10 and the field effect transistor 30. When the three components are connected, corresponding conductive pins are respectively disposed between opposite surfaces between the laser transmitter 20, the capacitor 10, and the field effect transistor 30, to ensure that the laser transmitter 20 and the capacitor 10, and the laser transmitter 20 and the field effect transistor 30 that are adjacent can be directly connected through the conductive pins to form a laser transmission loop.

The capacitor 10 has a first surface facing the field effect transistor 30, and a first conductive pin 11 and a second conductive pin 12 are disposed on the first surface. The first conductive pin 11 is connected to one electrode plate of the capacitor 10, and the second conductive pin 12 is connected to another electrode plate of the capacitor 10.

It should be noted that in this application, the electrode plates are located inside the capacitor. Specifically, the capacitor may include a positive plate and a negative plate, in other words, the capacitor is formed by a positive plate and a negative plate.

The first conductive pin 11 and the second conductive pin 12 are arranged in a second direction. The second direction is perpendicular to the first direction. In addition, the two electrode plates of the capacitor 10 are also arranged in the second direction.

The field effect transistor 30 has a second surface facing the capacitor 10, and a third conductive pin 31 and a fourth conductive pin 32 are disposed on the second surface. The third conductive pin 31 and the fourth conductive pin 32 are respectively correspondingly connected to a source and a drain of the field effect transistor 30. For example, the third conductive pin 31 is connected to the source, and the fourth conductive pin 32 is connected to the drain. Alternatively, the third conductive pin 31 is connected to the drain, and the fourth conductive pin 32 is connected to the source.

The third conductive pin 31 and the fourth conductive pin 32 are arranged in the second direction. In the first direction, the third conductive pin 31 is opposite to the first conductive pin 11, and the fourth conductive pin 32 is opposite to the second conductive pin 12.

The laser transmitter 20 is located between the capacitor 10 and the field effect transistor 30, and specifically located between the first conductive pin 11 and the third conductive pin 31. The laser transmitter 20 has two surfaces disposed opposite to each other, and the two surfaces respectively face the first surface of the capacitor 10 and the second surface of the field effect transistor 30. A power supply pin 21 and a ground pin 22 are respectively disposed on the two surfaces that are of the laser transmitter 20 and that are disposed opposite to each other.

It can be learned from the foregoing descriptions that the conductive pins of the laser transmitter 20, the capacitor 10, and the field effect transistor 30 are disposed opposite to each other and enclosed in a ring, to facilitate a connection to form the laser transmission loop. When the components are electrically connected, the power supply pin 21 is disposed opposite to the first conductive pin 11, and is conductively connected to the first conductive pin 11. The ground pin 22 is disposed opposite to the third conductive pin 31, and is conductively connected to the second conductive pin 12. In addition, the second conductive pin 12 and the fourth conductive pin 32 are also conductively connected. A connection manner of the conductive pins of the formed laser transmission loop is shown in FIG. 6.

When the conductive connection between the foregoing conductive pins is implemented, different connection manners may be used for the conductive connection. The following describes connection manners between different conductive pins one by one.

The first conductive pin 11 and the power supply pin 21 are bonded and connected by using a conductive adhesive. For example, the conductive adhesive may be a conductive silver adhesive or another type of conductive adhesive. For ease of distinguishing, the conductive adhesive between the first conductive pin 11 and the power supply pin 21 is named as a first conductive adhesive. An electrical connection between the first conductive pin 11 and the power supply pin 21 is implemented by using the first conductive adhesive, and a fixed connection between the laser transmitter 20 and the capacitor 10 may also be implemented by using the first conductive adhesive.

Similarly, the third conductive pin 31 and the ground pin 22 are connected by using a conductive adhesive, and the conductive adhesive is named as a second conductive adhesive. A conductive connection and a fixed connection between the laser transmitter 20 and the field effect transistor 30 are implemented by using the second conductive adhesive.

With reference to the foregoing descriptions, the laser transmitter 20 is respectively connected to the capacitor 10 and the field effect transistor 30 by using the first conductive adhesive and the second conductive adhesive, so that the laser transmitter 20 is separately conductively connected to the capacitor 10 and the field effect transistor 30, and is also separately fixedly connected to the capacitor 10 and the field effect transistor 30.

The second conductive pin 12 and the fourth conductive pin 32 are conductively connected through a conductive column 40. As shown in FIG. 4, the conductive column 40 is located between the second conductive pin 12 and the fourth conductive pin 32, and the conductive column 40 is separately bonded and connected to the second conductive pin 12 and the fourth conductive pin 32 by using the conductive adhesive. When the foregoing structure is used, the conductive column 40 and the laser transmitter 20 are disposed on a same layer, to fill a gap between the second conductive pin 12 and the fourth conductive pin 32. The conductive column 40 is separately bonded and connected to the third conductive pin 31 and the fourth conductive pin 32 by using the conductive adhesive, to implement a conductive connection between the capacitor 10 and the field effect transistor 30, and to implement a fixed connection between the capacitor 10 and the field effect transistor 30.

It can be learned with reference to the structure shown in FIG. 4 that the conductive column 40 and the laser transmitter 20 are disposed on the same layer, and two opposite ends of the capacitor 10 and the field effect transistor 30 are fixedly connected through the laser transmitter 20 and the conductive column 40 respectively, so that the laser transmitter 20, the capacitor 10, and the field effect transistor 30 can form a function module with a stable structure.

In an optional solution, the conductive column 40 may be prepared by using different materials, for example, a material with higher conductivity such as copper, aluminum, or silver, so that the conductive column 40 has smaller resistance, and impact on the laser transmission loop is reduced.

In an optional solution, the conductive column 40 may alternatively be a conductive adhesive layer.

When the conductive adhesive layer is used for the conductive column, the conductive column may be directly bonded and connected to the second conductive pin 12 and the fourth conductive pin 32, to implement a conductive connection and a fixed connection between the second conductive pin 12 and the fourth conductive pin 32.

It should be understood that the foregoing example is merely a specific connection manner between the pins. In addition to the foregoing connection manner, another connection manner may be used. For example, the power supply pin 21 is connected to the first conductive pin 11 through welding, the ground pin 22 is connected to the third conductive pin 31 through welding, and the second conductive pin 12 and the fourth conductive pin 32 are separately connected to the conductive column 40 through welding. In this manner, a conductive connection and a fixed connection between the capacitor 10, the laser transmitter 20, and the field effect transistor 30 can also be implemented.

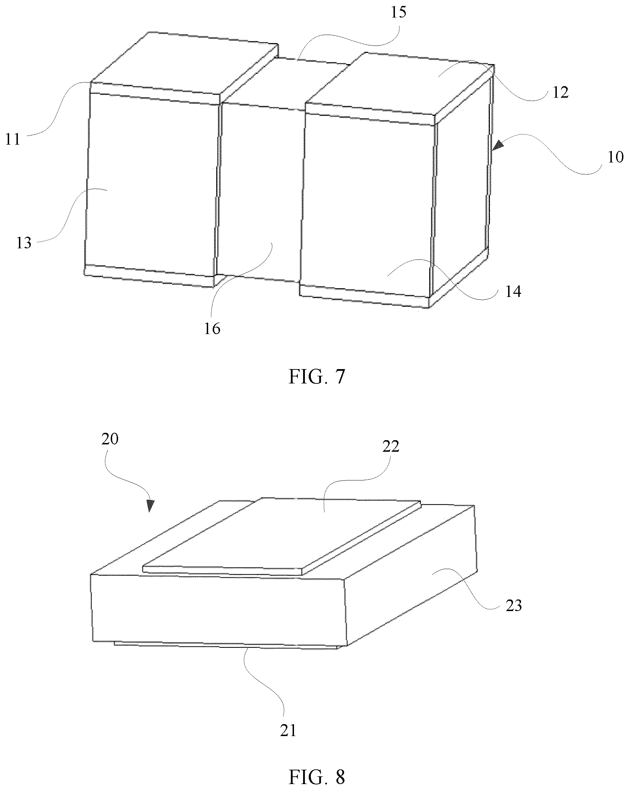

FIG. 7 is a schematic diagram of a structure of the capacitor 10 according to an embodiment of this application. The capacitor 10 provided in embodiments of this application includes a plurality of conductive pins. The pins are classified into an internal pin and an external pin based on functions.

The internal pin is a pin used for an internal connection of the laser transmit module, for example, the first conductive pin 11 and the second conductive pin 12 provided in embodiments of this application. The capacitor 10 has a first surface 15, the first conductive pin 11 and the second conductive pin 12 are disposed at two ends of the first surface 15, and there is a sufficient spacing between the first conductive pin 11 and the second conductive pin 12 to ensure electrical isolation between the two pins.

In an optional solution, to ensure reliability of a connection between the capacitor 10 and another component, when the first conductive pin 11 and the second conductive pin 12 are disposed, the first conductive pin 11 and the second conductive pin 12 have larger sizes and areas, to ensure high reliability of a connection to the laser transmitter or the field effect transistor.

The external pin is a pin used by the laser transmit module to connect to a circuit board, for example, a fifth conductive pin 13 and a sixth conductive pin 14. The fifth conductive pin 13 is configured to be connected to a power supply of the circuit board, and the sixth conductive pin 14 is configured to conductively connect to a ground layer of the circuit board. When cooperating with the circuit board, both the fifth conductive pin 13 and the sixth conductive pin 14 face the circuit board.

It should be understood that, in embodiments of this application, the internal pin and the external pin are merely functionally classified based on the components connected to the pins, and whether the conductive pin of the capacitor is used as the internal pin or the external pin is not specifically limited.

The first conductive pin 11 and the fifth conductive pin 13 are located at one end of the capacitor 10, and the second conductive pin 12 and the sixth conductive pin 14 are located at another end of the capacitor 10. The fifth conductive pin 13 and the first conductive pin 11 are separately conductively connected to one electrode plate of the capacitor 10. The sixth conductive pin 14 and the second conductive pin 12 are separately conductively connected to another electrode plate of the capacitor 10.

The capacitor 10 has a fourth surface 16 adjacent to the first surface 15. The first surface 15 is a surface cooperating with the laser transmitter, and the fourth surface 16 is a surface connected to the circuit board. For example, the fifth conductive pin 13 and the sixth conductive pin 14 are disposed on the fourth surface 16, to facilitate a connection of the fifth conductive pin 13 and the sixth conductive pin 14 to the circuit board.

It should be understood that the fifth conductive pin 13 and the sixth conductive pin 14 may alternatively be disposed on another surface. The fifth conductive pin 13 and the sixth conductive pin 14 are external conductive pins, and cause no impact to a size of the laser transmission loop. Therefore, the fifth conductive pin 13 and the sixth conductive pin 14 may be disposed on a surface of the capacitor 10 other than the first surface 15. This is not specifically limited in this application.

FIG. 8 is a schematic diagram of a structure of the laser transmitter according to an embodiment of this application. The laser transmitter 20 is a laser transmitter that emits light from a side wall, and has a light exit surface 23. The power supply pin 21 and the ground pin 22 are located on two sides of the light exit surface 23, so that when the laser transmitter 20 is connected to the capacitor and the field effect transistor, the light exit surface 23 of the laser transmitter 20 is not blocked.

In an optional solution, a size of the power supply pin 21 and a size of the ground pin 22 are not limited. The size of the power supply pin 21 may be greater than the size of the ground pin 22, or the size of the power supply pin 21 may be less than the size of the ground pin 22.

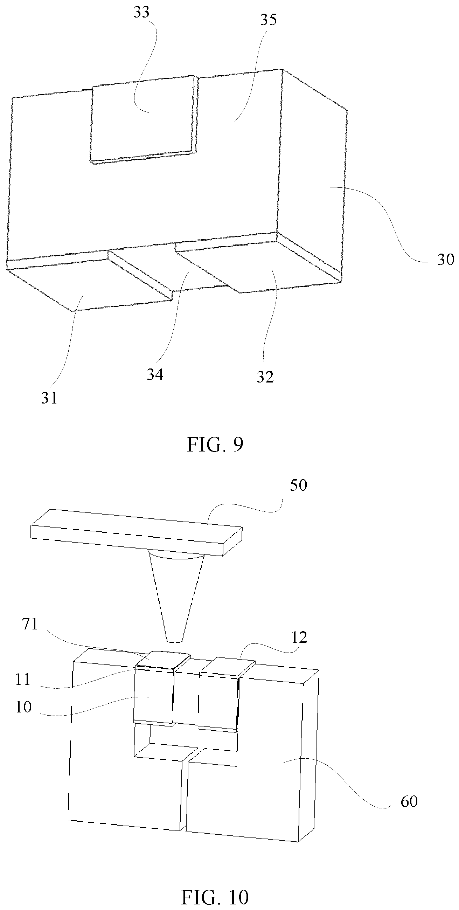

FIG. 9 is a schematic diagram of a structure of the field effect transistor 30 according to an embodiment of this application. The field effect transistor 30 includes the third conductive pin 31, the fourth conductive pin 32, and a control pin 33. The third conductive pin 31 is connected to the source, and the fourth conductive pin 32 is connected to the drain. Alternatively, the third conductive pin 31 is connected to the drain, and the fourth conductive pin 32 is connected to the source. The control pin 33 is connected to a gate of the field effect transistor 30.

The third conductive pin 31 and the fourth conductive pin 32 are internal pins of the laser transmit module, and the control pin 33 is an external pin of the laser transmit module. To facilitate a connection to the circuit board, the control pin 33 is located on one surface of the field effect transistor 30, and the third conductive pin 31 and the fourth conductive pin 32 are located on another surface of the field effect transistor 30. For example, the surface on which the control pin 33 is located is opposite to or adjacent to the surface on which the third conductive pin 31 and the fourth conductive pin 32 are located. As shown in FIG. 9, the control pin 33 is disposed on a third surface 35, and the third conductive pin 31 and the fourth conductive pin 32 are disposed on a second surface 34. The third surface 35 is a surface on which the field effect transistor 30 is connected to the circuit board, and the second surface 34 is adjacent to the third surface 35.

In an optional solution, after the field effect transistor 30 and the capacitor 10 form the laser transmit module, the third surface 35 of the field effect transistor 30 and the fourth surface 16 of the capacitor 10 are located on a same plane. In this way, the fifth conductive pin 13 and the sixth conductive pin 14 of the capacitor 10 and the control pin 33 of the field effect transistor 30 may face the circuit board at the same time, to facilitate a fixed connection between the laser transmit module and the circuit board.

FIG. 9 shows that the control pin 33 is disposed on the third surface 35 adjacent to the second surface 34. However, a location at which the control pin 33 is disposed is not specifically limited in embodiments of this application, and the control pin 33 may alternatively be disposed on a surface other than the second surface 34. In addition, the control pin 33 is an external pin, so that an area of the laser transmission loop is not affected. The control pin 33 may be disposed based on an actual requirement, provided that a connection to the circuit board is facilitated.

To facilitate understanding of the laser transmit module provided in embodiments of this application, embodiments of this application further provide a method for preparing the laser transmit module. The following describes the method in detail with reference to specific FIG. 10 to FIG. 13.

Step 001: Coat a conductive silver adhesive on the first conductive pin 11 of the capacitor.

Specifically, as shown in FIG. 10, the capacitor 10 may be a standard ceramic capacitor 10, and the capacitor 10 is clamped and secured through a mechanical tong 60. After the capacitor 10 is secured, the first conductive pin 11 of the capacitor 10 faces upwards, and a first conductive adhesive layer 71 is evenly coated on the first conductive pin 11 by using a dispensing machine 50. The first conductive adhesive layer 71 is a conductive silver adhesive, and a thickness of the conductive silver adhesive is approximately 10 $\mu$m, where the thickness of the conductive silver adhesive may be 8 $\mu$m, 9 $\mu$m, 10 $\mu$m, 11 $\mu$m, 12 $\mu$m, or the like.

It should be understood that, when the conductive silver adhesive is coated, an actual coating area of the conductive silver adhesive is slightly less than an area of the first conductive pin 11, to avoid a short circuit caused by extrusion and overflow of the conductive silver adhesive in a subsequent step.

Step 002: Fixedly connect the laser transmitter 20 to the capacitor 10.

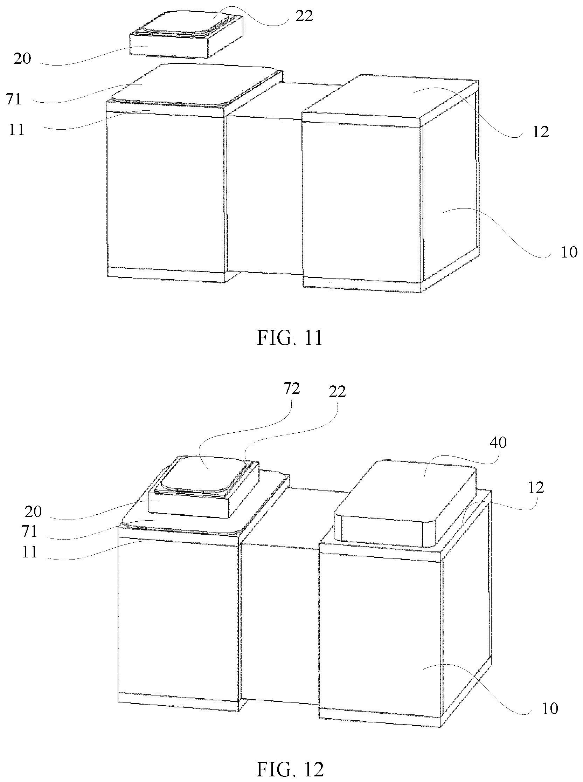

Specifically, as shown in FIG. 11, the laser transmitter 20 that emits light from the side wall is used in embodiments of this application. The ground pin 22 of the laser transmitter 20 is sucked by using a chip mounter, with the power supply pin 21 (as shown in FIG. 5) facing the first conductive pin 11, and the laser transmitter 20 is placed at the first conductive pin 11 of the capacitor 10 by using the chip mounter. Because the conductive silver adhesive (the first adhesive layer 71) is coated on a surface of the first conductive pin 11, the power supply pin 21 and the first conductive pin 11 may be bonded.

Step 003: Separately connect the field effect transistor 30 to the capacitor 10 and the laser transmitter 20.

Specifically, as shown in FIG. 12, adhesive layers are respectively coated on the ground pin 22 and the second conductive pin 12. The adhesive layer coated on the ground pin 22 is a second adhesive layer 72. The second adhesive layer 72 is a conductive silver adhesive, and a thickness of the conductive silver adhesive is approximately 10 $\mu$m. Specifically, the thickness of the conductive silver adhesive may be 8 $\mu$m, 9 $\mu$m, 10 $\mu$m, 11 $\mu$m, 12 $\mu$m, or the like.

The adhesive layer coated on the second conductive pin 12 forms the conductive column 40. The conductive column 40 may be a conductive silver adhesive, and a thickness of the conductive silver adhesive is 130 $\mu$m (the thickness of the conductive silver adhesive may alternatively be 100 $\mu$m, 110 $\mu$m, 120 $\mu$m, 130 $\mu$m, or the like). It should be understood that a thicker conductive silver adhesive is coated on the second conductive pin 12 to compensate for a three-dimensional assembly height difference caused by the laser transmitter 20. The elastic conductive silver adhesive is used as the conductive column 40, so that a height tolerance can be absorbed, and flatness deterioration caused by a rough surface of each component pin can be alleviated to reduce an assembly difficulty.

In addition, a coating area of the conductive silver adhesive coated on the ground pin 22 and the second conductive pin 12 is slightly less than that of a corresponding conductive pin, to avoid adhesive overflow during assembly.

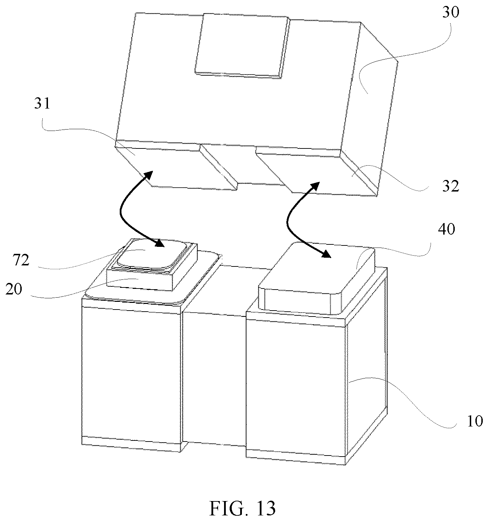

As shown in FIG. 13, after the conductive silver adhesive is coated, the third conductive pin 31 and the fourth conductive pin 32 of the field effect transistor 30 are respectively bonded to the ground pin 22 of the laser transmitter 20 and the second conductive pin 12 of the capacitor 10.

When the field effect transistor 30 is attached, the field effect transistor 30 is bonded to the foregoing module through a chip mounter. The field effect transistor 30 is mainly aligned and simply pressed and bonded, and the field effect transistor 30 can be contacted and adhered by relying on gravity of the field effect transistor 30.

After each pin of the capacitor 10, the laser transmitter 20, and the field effect transistor 30 is connected based on the foregoing steps, standing for several hours is required for solidification of the conductive silver adhesive, and the laser transmit module shown in FIG. 4 is assembled.

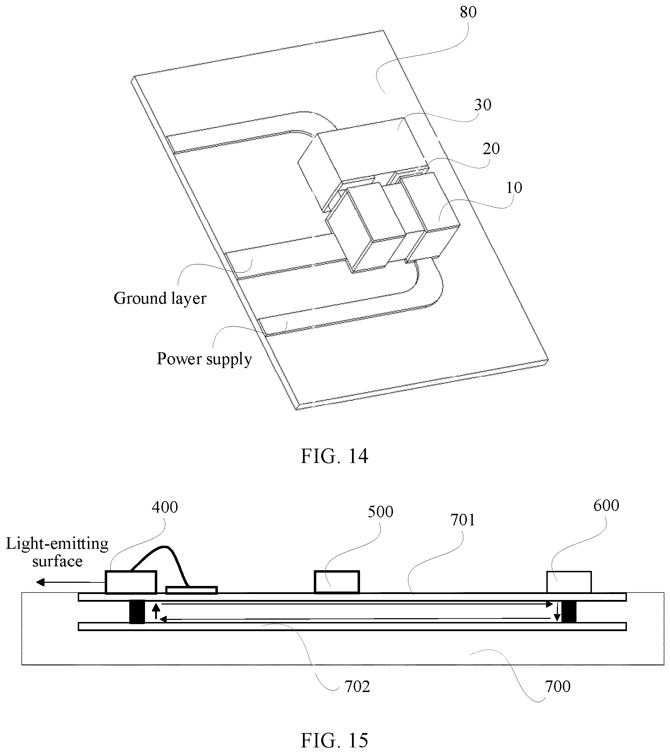

FIG. 14 is a schematic application diagram of the laser transmit module according to an embodiment of this application. When the laser transmit module assembled by the capacitor 10, the laser transmitter 20, and the field effect transistor 30 is secured on a circuit board 80, three external pins (the fifth conductive pin 13 and the sixth conductive pin 14 on the capacitor 10 shown in FIG. 7 and the control pin 33 on the field effect transistor 30 shown in FIG. 9) of the laser transmit module face the circuit board 80, and are connected to a power supply, a ground layer, and a control circuit of the circuit board 80 in a one-to-one correspondence. The capacitor is charged by the power supply, and then a transmission instruction (usually a high level) is input from the control pin, so that the field effect transistor 30 is short-circuited to ground, and the capacitor 10 is discharged instantaneously, to be specific, the laser transmitter 20 can be driven to transmit a narrow-pulse high-power laser beam.

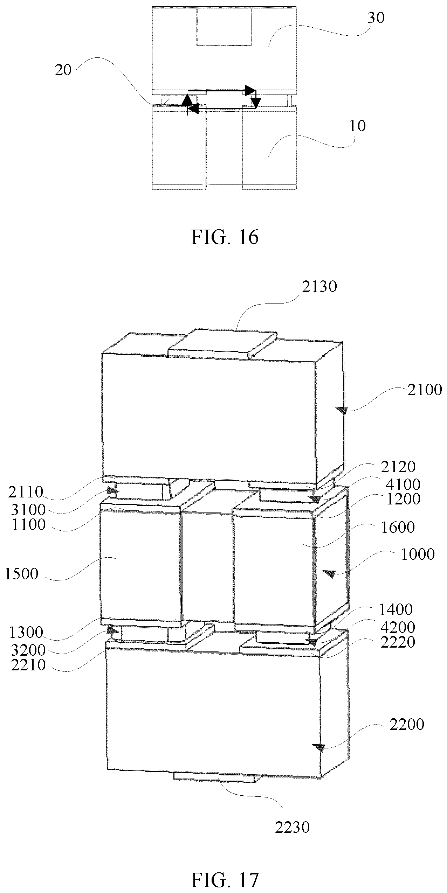

In the laser transmission loop, loop inductance generated by the laser transmission loop affects a pulse peak value of a laser pulse transmitted by the laser transmitter, affecting a detection distance of the laser pulse. A value of the loop inductance is mainly affected by an area of the laser transmission loop. A larger area of the laser transmission loop indicates larger loop inductance. Therefore, in embodiments of this application, the capacitor, the laser transmitter, and the field effect transistor are vertically assembled. When the conductive pins of the capacitor, the laser transmitter and the field effect transistor are interconnected, the conductive pins of two components are disposed opposite to each other and are directly fixedly connected through a conductor, so that a size occupied by the conductor used for the connection between the components in the laser transmission loop is minimized, to reduce a loop area of the laser transmission loop, reduce the loop inductance, and increase a detection distance and detection precision of the laser transmitter. To intuitively understand that the loop area is reduced by using the laser transmit module provided in embodiments of this application, the laser transmit module provided in embodiments of this application is compared with a laser transmit module in a conventional technology. FIG. 15 shows a laser transmission loop formed by the laser transmit module in the conventional technology. FIG. 16 shows the laser transmission loop formed by the laser transmit module provided in embodiments of this application.

First, refer to FIG. 15. A capacitor 500, a laser transmitter 400, and a field effect transistor 600 in the laser transmit module in the conventional technology are separately secured on a circuit board 700, and are separately conductively connected to a surface layer circuit 701 of the circuit board 700. Pins of the laser transmitter 400, the capacitor 500, and the field effect transistor 600 are separately correspondingly fixedly connected to a pad of the surface layer circuit 701, and form a laser transmission loop through a ground layer circuit 702 in the circuit board 700 and the surface layer circuit 701. The formed laser transmission loop is a loop shown by a solid arrow in FIG. 15. When components (the capacitor 500, the laser transmitter 400, and the field effect transistor 600) are welded on the circuit board 700, operation space needs to be retained to avoid a collision between the components. In addition, a distance between the surface layer circuit 701 and the inner ground layer circuit 702 is limited by a process of preparing the circuit board 700, and a specific spacing thickness needs to be retained. Therefore, an area of the laser transmission loop cannot be further reduced.

In the laser transmit module that is provided in embodiments of this application and that is shown in FIG. 16, the capacitor 10, the laser transmitter 20, and the field effect transistor 30 are directly connected through the conductive pins, and the formed laser transmission loop is shown by a solid arrow shown in FIG. 16. It can be learned from FIG. 16 that the laser transmit module provided in embodiments of this application does not need participation of a circuit in the circuit board, and the laser transmission loop can be formed only by the conductive pins directly connected between the components. This avoids impact on an area of the laser transmission loop when the surface layer circuit and the ground layer circuit on the circuit board participate in the laser transmission loop. In addition, in this application, the conductive pins are interconnected, so that a spacing between the components can be further reduced. Compared with the laser transmit module shown in FIG. 15, impact of wires between the components on the laser transmission loop is reduced.

To facilitate understanding of an effect of increasing a detection distance of the laser radar by the laser transmit module provided in embodiments of this application, simulation is performed on the two types of laser transmit modules shown in FIG. 15 and FIG. 16. In the conventional technology, parasitic inductance of the laser transmit module is 0.6 nH, and parasitic inductance of the laser transmit module provided in embodiments of this application is reduced to 0.12 nH, which is reduced by approximately 75% compared with the parasitic inductance of the laser transmit module in the conventional technology. In addition, a peak current may be doubled, and peak transmit optical power may be increased by 50% or more. It can be learned from the foregoing descriptions that, based on the laser transmit module provided in embodiments of this application, a volume of the laser transmit module is reduced, and the parasitic inductance is reduced. In addition, a pulse width of a pulse beam is reduced, and peak power is increased, thereby increasing the detection precision and the detection distance of the laser radar.

FIG. 17 shows a modified structure based on the laser transmit module shown in FIG. 4. In the laser transmit module shown in FIG. 17, there are two laser transmitters and two field effect transistors. For ease of description, the two laser transmitters are named as a first laser transmitter 3100 and a second laser transmitter 3200, and the two field effect transistors are named as a first field effect transistor 2100 and a second field effect transistor 2200.

The first laser transmitter 3100 and the second laser transmitter 3200 are respectively arranged on two sides of a capacitor 1000. The first field effect transistor 2100 and the second field effect transistor 2200 are respectively arranged on sides that are of the first laser transmitter 3100 and the second laser transmitter 3200 and that are away from the capacitor 1000.

The capacitor 1000, the first laser transmitter 3100, and the first field effect transistor 2100 are disposed in a stacked manner, and form a structure of the laser transmit module shown in FIG. 4. A seventh conductive pin 1100 and an eighth conductive pin 1200 are disposed on a surface that is the capacitor 1000 and that faces the first field effect transistor 2100, and a ninth conductive pin 2110 and a tenth conductive pin 2120 are disposed on a surface that is of the first field effect transistor 2100 and that faces the capacitor 1000. A first power supply pin is disposed on a surface that is of the first laser transmitter 3100 and that faces the capacitor 1000, and a first ground pin is disposed on a surface that is of the first laser transmitter 3100 and that faces the first field effect transistor 2100. When electrically connected, the first power supply pin is bonded and connected to the seventh conductive pin 1100 by using a conductive adhesive, and the first ground pin is bonded and connected to the ninth conductive pin 2110 by using the conductive adhesive. The eighth conductive pin 1200 is bonded and connected to the tenth conductive pin 2120 through a first conductive column 4100. For a specific connection manner, refer to the connection manner between the conductive pins corresponding to the capacitor, the laser transmitter, and the field effect transistor shown in FIG. 4. Details are not described herein again.

The capacitor 1000, the second laser transmitter 3200, and the second field effect transistor 2200 are disposed in a stacked manner, and form a structure of the laser transmit module shown in FIG. 4. An eleventh conductive pin 1300 and a twelfth conductive pin 1400 are disposed on a surface that is of the capacitor 1000 and that faces the second field effect transistor 2200, and a thirteenth conductive pin 2210 and a fourteenth conductive pin 2220 are disposed on a surface that is of the second field effect transistor 2200 and that faces the capacitor 1000. A second power supply pin is disposed on a surface that is of the second laser transmitter 3200 and that faces the capacitor 1000, and a second ground pin is disposed on a surface that is of the second laser transmitter 3200 and that faces the second field effect transistor 2200. When electrically connected, the second power supply pin is bonded and connected to the eleventh conductive pin 1300 by using a conductive adhesive, and the second ground pin is bonded and connected to the thirteenth conductive pin 2210 by using the conductive adhesive. The twelfth conductive pin 1400 is bonded and connected to the fourteenth conductive pin 2220 through a second conductive column 4200. For a specific connection manner, refer to the connection manner between the conductive pins corresponding to the capacitor, the laser transmitter, and the field effect transistor shown in FIG. 4. Details are not described herein again.

The first field effect transistor 2100 includes a first control pin 2130. The first control pin 2130 is disposed on a surface opposite to the tenth conductive pin 2120. During use, a control signal is input through the first control pin 2130, to control the first laser transmitter 3100 to transmit a laser pulse. Similarly, the second field effect transistor 2200 includes a second control pin 2230. The second control pin 2230 is disposed on a surface opposite to the thirteenth conductive pin 2210. During use, a control signal is input through the second control pin 2230, to control the second laser transmitter 3200 to transmit a laser pulse. Both the first laser transmitter 3100 and the second laser transmitter 3200 are powered through the same capacitor 1000. The laser transmit module shown in FIG. 17 may also be equivalent to a structure in which two laser transmit modules as shown in FIG. 4 share a capacitor.

The capacitor 1000 further has a fifteenth conductive pin 1500 and a sixteenth conductive pin 1600. The fifteenth conductive pin 1500 and the sixteenth conductive pin 1600 are external pins of the laser transmit module, and are configured to be electrically connected to a power supply and a ground layer of the circuit board, to charge the capacitor 1000 through the power supply of the circuit board.

For the method for preparing the laser transmit module shown in FIG. 17, refer to the process of preparing the laser transmit module shown in FIG. 4. Details are not described herein again.

It can be learned from comparison between FIG. 17 and FIG. 4 that, in the laser transmit module shown in FIG. 17, the capacitor is shared, so that two laser transmitters are powered through one capacitor, to increase an arrangement density of the components, and further promote miniaturization development of the laser transmit module. In addition, based on an arrangement manner of the components in the laser transmit module shown in FIG. 17, a laser transmission loop corresponding to each laser transmitter is the same as the laser transmission loop of the laser transmit module shown in FIG. 4.

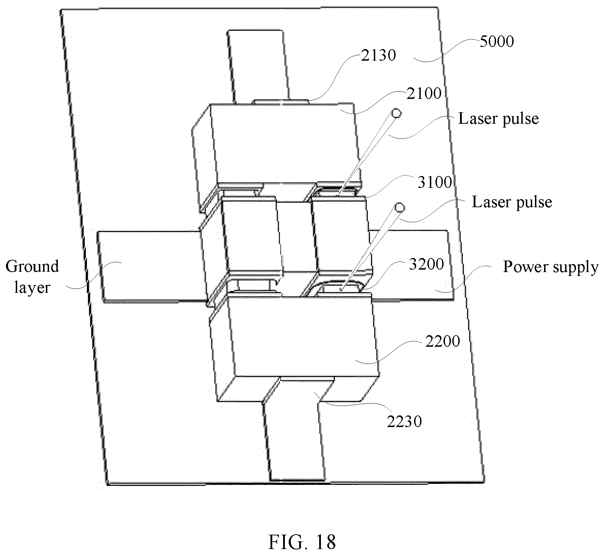

FIG. 18 is a schematic diagram of an application scenario of the laser transmit module according to an embodiment of this application. For some reference numerals in FIG. 18, refer to same reference numerals in FIG. 17. During use of the laser transmit module, the fifteenth conductive pin and the sixteenth conductive pin of the capacitor 1000 face a circuit board 5000, and are conductively connected to a power supply and a ground layer of the circuit board 5000. In addition, the first control pin 2130 and the second control pin 2230 are separately connected to a control circuit on the circuit board 5000, to apply a control signal to the first field effect transistor 2100 and the second field effect transistor 2200.

It should be understood that although FIG. 4 and FIG. 17 show structures of two different laser transmit modules, quantities of laser transmitters and corresponding field effect transistors in the laser transmit module are not specifically limited in embodiments of this application. Based on disposition principles in FIG. 4 and FIG. 17, quantities of laser transmitters and field effect transistors and disposition positions of the laser transmitter and the field effect transistor may be appropriately arranged based on a requirement. Details are not described herein.

An embodiment of this application further provides a laser radar. Refer to the schematic diagram of the structure of the laser radar shown in FIG. 1. The laser radar includes any one of the foregoing laser transmitters, a scanning apparatus, and a detector. The scanning apparatus is configured to reflect a detection laser transmitted by a laser transmit module into a scanning laser, and is configured to reflect, to the detector, a reflected laser obtained when the scanning laser reflected back by a detected object. The detector is configured to perform laser detection based on the reflected laser. In the foregoing technical solutions, the laser transmission loop is formed through a direct connection between the conductive pins of the capacitor, the laser transmitter, and the field effect transistor, to reduce distances between the foregoing components and reduce the area of the formed laser transmission loop, so as to reduce the loop inductance, increase the pulse peak value of the laser pulse, and further increase the detection distance of the laser pulse transmitted by the laser transmit module.

An embodiment of this application further provides a mobile platform. The mobile platform may be a common autonomous driving tool or an intelligent tool such as an aircraft or an automobile. The mobile platform includes a central control processor and at least one of the foregoing laser radars. The central control processor controls movement of the mobile platform based on a result of laser detection performed by each laser radar.

In a single laser radar, a transmission instruction is first sent by a control system during detection. After a laser transmit module obtains the instruction, a transmission driving circuit generates a pulse current to drive a laser transmitter to transmit a laser pulse, and the laser pulse is transmitted from a screen window after being adjusted by an internal scanning apparatus. The transmitted light is reflected by a surface of a target object, and part of the reflected laser pulse returns along an original path, returns from the screen window to the laser radar after a very short period of time, and reaches a detector after being adjusted by the scanning apparatus. Because power of the returned laser pulse is very small, the laser pulse needs to be converted into electricity through light and then amplified, and converted into an electrical signal and sent to the control system. The control system analyzes a time difference between transmission and reception of the laser pulse to determine a distance of the target object, to form a position of a coordinate point of the target object. The laser transmitter and the detector simultaneously work to continuously transmit and receive light beams from different angles, to finally obtain points of positions on a surface of the target object. These coordinate points are combined to form an outline point cloud picture of the object. In this application, for the laser transmit module, the laser transmission loop is formed through a direct connection between the conductive pins of the capacitor, the laser transmitter, and the field effect transistor, to reduce distances between the foregoing components and reduce the area of the formed laser transmission loop, so as to reduce the loop inductance, increase the pulse peak value of the laser pulse, and further increase the detection distance of the laser pulse transmitted by the laser transmit module. In this way, a small obstacle can be identified in a long distance. Therefore, the laser radar is very suitably used in scenarios such as avoidance of a small object on the ground in a long distance in a high-speed cruise scenario.

**Claims**

1. A laser transmit module (1), comprising: a capacitor (10), a laser transmitter (20), and a field effect transistor (30), wherein the capacitor (10) is configured to supply power to the laser transmitter (20); the field effect transistor (30) is configured to control the laser transmitter (20) to be turned on;

   the capacitor (10), the laser transmitter (20), and the field effect transistor (30) are interconnected through conductive pins to form a laser transmission loop; and the capacitor (10), the laser transmitter (20), and the field effect transistor (30) are fixedly connected through the interconnected conductive pins; wherein the capacitor (10), the laser transmitter (20), and the field effect transistor (30) are disposed in a stacked manner, and **characterized in that** the laser transmitter (20) is located between the capacitor (10) and the field effect transistor (30).

2. The laser transmit module (1) according to claim 1, wherein a first conductive pin (11) and a second conductive pin (12) are disposed on a first surface that is of the capacitor (10) and that faces the field effect transistor (30);

a third conductive pin (31) and a fourth conductive pin (32) are disposed on a second surface that is of the field effect transistor (30) and that faces the capacitor (10); a power supply pin (21) and a ground pin (22) are respectively disposed on two opposite surfaces of the laser transmitter (20); the power supply pin (21) and the first conductive pin (11) are disposed opposite to each other and conductively connected; the ground pin (22) and the third conductive pin (31) are disposed opposite to each other and conductively connected; and the second conductive pin (12) and the fourth conductive pin (32) are disposed opposite to each other and conductively connected.

3. The laser transmitter module according to claim 2, wherein the power supply pin (21) and the first conductive pin (11) are bonded and connected by using a conductive adhesive; and the ground pin (22) and the third conductive pin (31) are bonded and connected by using a conductive adhesive.

4. The laser transmitter module according to claim 2 or 3, wherein the second conductive pin (12) and the fourth conductive pin (32) are conductively connected through a conductive column (40), and the conductive column (40) and the laser transmitter (20) are disposed on a same layer.

5. The laser transmit module (1) according to claim 4, wherein the conductive column (40) is separately bonded and connected to the second conductive pin (12) and the fourth conductive pin (32) by using a conductive adhesive.

6. The laser transmit module (1) according to claim 4, wherein the conductive column (40) is a conductive adhesive layer, and the conductive adhesive layer is separately bonded and connected to the second conductive pin (12) and the fourth conductive pin (32).

7. The laser transmit module (1) according to any one of claims 2 to 6, wherein the field effect transistor (30) further comprises a control pin (33), and the control pin (33) is located on a third surface (35) of the field effect transistor (30).

8. The laser transmit module (1) according to claim 7, wherein the third surface (35) and the second surface (34) are two opposite surfaces or two adjacent surfaces.

9. The laser transmit module (1) according to any one of claims 2 to 8, wherein the capacitor (10) comprises a fifth conductive pin (13) and a sixth conductive pin (14);

the fifth conductive pin (13) and the first conductive pin (11) are separately conductively connected to one electrode plate of the capacitor (10); the sixth conductive pin (14) and the second conductive pin (12) are separately conductively connected to another electrode plate of the capacitor (10); and the fifth conductive pin (13) is configured to be connected to a power supply of a circuit board (80), and the sixth conductive pin (14) is configured to be conductively connected to a ground layer of the circuit board (80).

10. The laser transmit module (1) according to claim 9, wherein both the fifth conductive pin (13) and the sixth conductive pin (14) face the circuit board (80).

11. A laser radar, comprising the laser transmit module (1) according to any one of claims 1 to 10, a scanning apparatus, and a detector, wherein

the scanning apparatus is configured to reflect a detection laser pulse transmitted by the laser transmit module into a scanning laser light and is configured to reflect, to the detector, a reflected laser pulse obtained when the scanning laser light reflected back by a detected object; and the detector is configured to perform laser detection based on the reflected laser pulse.

**Patentansprüche**

1. Laserübertragungsmodul (1), umfassend: einen Kondensator (10), einen Lasertransmitter (20) und einen Feldeffekttransistor (30), wobei der Kondensator (10) konfiguriert ist, um den Lasertransmitter (20) mit Strom zu versorgen; der Feldeffekttransistor (30) konfiguriert ist, um das Einschalten des Lasertransmitters (20) zu steuern;

der Kondensator (10), der Lasertransmitter (20) und der Feldeffekttransistor (30) über leitfähige Stifte miteinander verbunden sind, um eine Laserübertragungsschleife zu bilden; und der Kondensator (10), der Lasertransmitter (20) und der Feldeffekttransistor (30) über die miteinander verbundenen leitfähigen Stifte fixiert miteinander verbunden sind; wobei der Kondensator (10), der Lasertransmitter (20) und der Feldeffekttransistor (30) gestapelt angeordnet sind, und **dadurch gekennzeichnet sind, dass** sich der Lasertransmitter (20) zwischen dem Kondensator (10) und dem Feldeffekttransistor (30) befindet.

2. Laserübertragungsmodul (1) nach Anspruch 1, wobei ein erster leitfähiger Stift (11) und ein zweiter leitfähiger Stift (12) auf einer ersten Oberfläche des Kondensators (10) angeordnet sind, die dem Feldeffekttransistor (30) zugewandt ist;

ein dritter leitfähiger Stift (31) und ein vierter leitfähiger Stift (32) auf einer zweiten Oberfläche des Feldeffekttransistors (30) angeordnet sind, die dem Kondensator (10) zugewandt ist;
ein Stromversorgungsstift (21) und ein Erdungsstift (22) jeweils auf zwei gegenüberliegenden Oberflächen des Lasertransmitters (20) angeordnet sind;
der Stromversorgungsstift (21) und der erste leitfähige Stift (11) einander gegenüberliegend angeordnet und leitfähig verbunden sind;
der Erdungsstift (22) und der dritte leitfähige Stift (31) einander gegenüberliegend angeordnet und leitfähig verbunden sind; und
der zweite leitfähige Stift (12) und der vierte leitfähige Stift (32) einander gegenüberliegend angeordnet und leitfähig verbunden sind.

3. Laserübertragungsmodul nach Anspruch 2, wobei der Stromversorgungsstift (21) und der erste leitfähige Stift (11) mithilfe eines leitfähigen Klebstoffs haften und verbunden sind; und
der Erdungsstift (22) und der dritte leitfähige Stift (31) mithilfe eines leitfähigen Klebstoffs haften und verbunden sind.

4. Laserübertragungsmodul nach Anspruch 2 oder 3, wobei der zweite leitfähige Stift (12) und der vierte leitfähige Stift (32) durch eine leitfähige Säule (40) leitfähig verbunden sind und die leitfähige Säule (40) und der Lasertransmitter (20) auf derselben Schicht angeordnet sind.

5. Laserübertragungsmodul (1) nach Anspruch 4, wobei die leitfähige Säule (40) separat an dem zweiten leitfähigen Stift (12) und dem vierten leitfähigen Stift (32) mithilfe eines leitfähigen Klebstoffs haftet und mit ihnen verbunden ist.

6. Laserübertragungsmodul (1) nach Anspruch 4, wobei die leitfähige Säule (40) eine leitfähige Klebstoffschicht ist und die leitfähige Klebstoffschicht separat an dem zweiten leitfähigen Stift (12) und dem vierten leitfähigen Stift (32) haftet und mit ihnen verbunden ist.

7. Laserübertragungsmodul (1) nach einem der Ansprüche 2 bis 6, wobei der Feldeffekttransistor (30) ferner einen Steuerstift (33) umfasst und sich der Steuerstift (33) auf einer dritten Oberfläche (35) des Feldeffekttransistors (30) befindet.

8. Laserübertragungsmodul (1) nach Anspruch 7, wobei die dritte Oberfläche (35) und die zweite Oberfläche (34) zwei gegenüberliegende Oberflächen oder zwei benachbarte Oberflächen sind.

9. Laserübertragungsmodul (1) nach einem der Ansprüche 2 bis 8, wobei der Kondensator (10) einen fünften leitfähigen Stift (13) und einen sechsten leitfähigen Stift (14) umfasst;

der fünfte leitfähige Stift (13) und der erste leitfähige Stift (11) separat leitfähig mit einer Elektrodenplatte des Kondensators (10) verbunden sind;
der sechste leitfähige Stift (14) und der zweite leitfähige Stift (12) separat leitfähig mit einer anderen Elektrodenplatte des Kondensators (10) verbunden sind; und
der fünfte leitfähige Stift (13) konfiguriert ist, um mit einer Stromversorgung einer Leiterplatte (80) verbunden zu sein, und der sechste leitfähige Stift (14) konfiguriert ist, um leitfähig mit einer Erdungsschicht der Leiterplatte (80) verbunden zu sein.

10. Laserübertragungsmodul (1) nach Anspruch 9, wobei sowohl der fünfte leitfähige Stift (13) als auch der sechste leitfähige Stift (14) der Leiterplatte (80) zugewandt sind.

11. Laserradar, umfassend das Laserübertragungsmodul (1) nach einem der Ansprüche 1 bis 10, eine Abtastvorrichtung und einen Detektor, wobei die Abtastvorrichtung konfiguriert ist, um einen von dem Laserübertragungsmodul übertragenen Detektionslaserimpuls in ein Abtastlaserlicht zu reflektieren und konfiguriert ist, um einen reflektierten Laserimpuls, der erlangt wird, wenn das Abtastlaserlicht von einem detektierten Objekt zurückreflektiert wird, zu dem Detektor zurück zu reflektieren; und
der Detektor konfiguriert ist, um eine Laserdetektion basierend auf dem reflektierten Laserimpuls durchzuführen.

**Revendications**

1. Module de transmission laser (1), comprenant : un condensateur (10), un émetteur laser (20), et un transistor à effet de champ (30), dans lequel le condensateur (10) est configuré pour alimenter l'émetteur laser (20) ; le transistor à effet de champ (30) est configuré pour commander la mise sous tension de l'émetteur laser (20) ;

le condensateur (10), l'émetteur laser (20), et le transistor à effet de champ (30) sont interconnectés par des broches conductrices pour former une boucle de transmission laser ; et le condensateur (10), l'émetteur laser (20), et le transistor à effet de champ (30) sont connectés de manière fixe par l'intermédiaire des broches conductrices interconnectées ;

dans lequel le condensateur (10), l'émetteur laser (20), et le transistor à effet de champ (30) sont disposés de manière empilée, et **caractérisé en ce que** l'émetteur laser (20) est situé entre le condensateur (10) et le transistor à effet de champ (30).

2. Module de transmission laser (1) selon la revendication 1, dans lequel une première broche conductrice (11) et une deuxième broche conductrice (12) sont disposées sur une première surface qui est celle du condensateur (10) et qui fait face au transistor à effet de champ (30) ;

une troisième broche conductrice (31) et une quatrième broche conductrice (32) sont disposées sur une deuxième surface qui est celle du transistor à effet de champ (30) et qui fait face au condensateur (10) ; une broche d'alimentation (21) et une broche de terre (22) sont respectivement disposées sur deux surfaces opposées de l'émetteur laser (20) ; la broche d'alimentation (21) et la première broche conductrice (11) sont disposées en face l'une de l'autre et connectées de manière conductrice ; la broche de terre (22) et la troisième broche conductrice (31) sont disposées en face l'une de l'autre et connectées de manière conductrice ; et la deuxième broche conductrice (12) et la quatrième broche conductrice (32) sont disposées en face l'une de l'autre et connectées de manière conductrice.

3. Module émetteur laser selon la revendication 2, dans lequel la broche d'alimentation (21) et la première broche conductrice (11) sont liées et connectées à l'aide d'un adhésif conducteur ; et la broche de terre (22) et la troisième broche conductrice (31) sont liées et connectées à l'aide d'un adhésif conducteur.

4. Module émetteur laser selon la revendication 2 ou 3, dans lequel la deuxième broche conductrice (12) et la quatrième broche conductrice (32) sont connectées de manière conductrice par l'intermédiaire d'une colonne conductrice (40), et la colonne conductrice (40) et l'émetteur laser (20) sont disposés sur une même couche.

5. Module de transmission laser (1) selon la revendication 4, dans lequel la colonne conductrice (40) est liée et connectée séparément à la deuxième broche conductrice (12) et à la quatrième broche conductrice (32) à l'aide d'un adhésif conducteur.

6. Module de transmission laser (1) selon la revendication 4, dans lequel la colonne conductrice (40) est une couche adhésive conductrice, et la couche adhésive conductrice est liée et connectée séparément à la deuxième broche conductrice (12) et à la quatrième broche conductrice (32).

7. Module de transmission laser (1) selon l'une quelconque des revendications 2 à 6, dans lequel le transistor à effet de champ (30) comprend également une broche de commande (33), et la broche de commande (33) est située sur une troisième surface (35) du transistor à effet de champ (30).

8. Module de transmission laser (1) selon la revendication 7, dans lequel la troisième surface (35) et la deuxième surface (34) sont deux surfaces opposées ou deux surfaces adjacentes.

9. Module de transmission laser (1) selon l'une quelconque des revendications 2 à 8, dans lequel le condensateur (10) comprend une cinquième broche conductrice (13) et une sixième broche conductrice (14) ;

la cinquième broche conductrice (13) et la première broche conductrice (11) sont connectées de manière conductrice séparément à une plaque d'électrode du condensateur (10) ; la sixième broche conductrice (14) et la deuxième broche conductrice (12) sont connectées de manière conductrice séparément à une autre plaque d'électrode du condensateur (10) ; et la cinquième broche conductrice (13) est configurée pour être connectée à une alimentation électrique d'une carte de circuit imprimé (80), et la sixième broche conductrice (14) est configurée pour être connectée de manière conductrice à une couche de terre de la carte de circuit imprimé (80).

10. Module de transmission laser (1) selon la revendication 9, dans lequel la cinquième broche conductrice (13) et la sixième broche conductrice (14) font face à la carte de circuit imprimé (80).

11. Radar laser, comprenant le module de transmission laser (1) selon l'une quelconque des revendications 1 à 10, un appareil de balayage, et un détecteur, dans lequel l'appareil de balayage est configuré pour réfléchir une impulsion laser de détection transmise par le module de transmission laser en une lumière laser de balayage et est configuré pour réfléchir, vers le détecteur, une impulsion laser réfléchie obtenue lorsque la lumière laser de balayage est réfléchie par un objet détecté ; et

le détecteur est configuré pour réaliser une détection laser sur la base de l'impulsion laser réfléchie.

FIG. 1

FIG. 2

FIG. 3

FIG. 4

FIG. 5

FIG. 6

FIG. 7

FIG. 8

FIG. 9

FIG. 10

EP 4 253 997 B1

FIG. 11

FIG. 12

FIG. 13

80

30

20

10

Ground layer

Power supply

FIG. 14

400

Light-emitting
surface

500

701

600

702

700

FIG. 15

FIG. 16

FIG. 17

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180045882 A1
- US 20180278011 A1
- US 20200135626 A1